# EUROPEAN PATENT APPLICATION

(11) **EP 2 653 053 A1**
(43) Date of publication of application: **23.10.2013**
(21) Application number: 12164912.3
(22) Date of filing: 20.04.2012
(51) Int. Cl.: A45C 11/00, A45C 15/00

(54) **Solar powered cases**

(71) Applicant: Samuel, Harvey, High Wycombe, Buckinghamshire HP13 5JY (GB)
(72) Inventor: Samuel, Harvey, High Wycombe, Buckinghamshire HP13 5JY (GB)

(57) **Abstract**

A case or shell for storage, protection, charging, transport, and general use of portable devices, incorporates an electronic circuit which uses a photovoltaic cell to generate electrical current to recharge the batteries or power the operational circuits of the portable device.

The invention integrates the solar panels within a case design functioning as a regular case, and the invention may be used with any type of portable device.The invention allows for combining any case design with that of a solar charger into a single item.

The case consists of at least one photovoltaic element and circuitry that, in combination, enables solar energy to be used to charge the battery within the device.

The energy producing circuitry of the case is in electrical connection with the charging circuit and battery of the portable device through the use of electrical connectors which are disposed within the case at a position suited to the portable device.

## Description

### Technical Field

This disclosure relates generally to solar chargers and portable device cases, in particular to solar charging which is integrated within the case for portable devices such as mobile phones, tablets, media players and other electronic devices so that the batteries can be charged without need for separate equipment.

### Background

The terms "solar cell" and "solar panel" are used interchangeably in the present disclosure to refer to the any light sensitive electric cell and is not intended to be limited to cells sensitive only to the Sun but to all light sources from which they can produce electricity. The term "portable device" or "device" is used to refer to battery powered items such as but not limited to mobiles phones, tablets, portable media centres, and handheld game consoles. This could include but is not limited to devices such as the Apple© iPhone©, or the Asus© Eee Pad©. The term "case" is used to refer to a regular case designed to house an electronic portable device, these cases are used not just for transport or storage of the portable device but also for everyday general use or protection of the device. The proposed invention allows for the combining of any case design with that of a solar charger into a single item.

Solar cell systems for charging the batteries of electronic devices such as mobile phones, tablets, MP3/MP4 players and many other related battery charged products are typically provided as separate units that connect to the battery powered device by means of a cable wire and plug. The solar charger is therefore a separate item to the portable device. Some solar cell systems integrate or attach solar charging cells to a dock or holster into which the device can be placed. Once the device is within the dock/holster an electrical connection is made between the device and the case so as to charge the internal battery, however these configurations usually mean the portable device cannot be used uninhibited as in regular operation intended by the device manufacturer. Current solar chargers are known to be bulky and render the device less portable. These configurations also require action on the user's part to begin charging, either by activating the charger or plugging the charger into the device.

It would therefore be useful to provide a solar cell charger configured in such a way that it would not have to be considered as a separate item and it would not add significant size or weight increase to the portable device. The proposed invention would allow the portable device to be charged without the user having to consider commencing the charging and without having to carry extra equipment together with the device. It would also allow the portable device's battery to be charged even while the device is being operated by the user.

### Brief Summary

An exemplary embodiment of the solar powered case of the present disclosure may provide an adequate power supply capable of charging many portable devices and products that utilise rechargeable batteries. The solar powered case would perform just as a regular case would for protection or aesthetics, with the added benefit of charging the portable device using energy created from radiant light sources. The case will also allow the device's standard charging method to be connected without removal of the case.

Further embodiments of a solar powered case of the present disclosure include an extendable section which would pull out from a slot in the case much like a drawer -this would serve the purpose of housing further integrated solar cells allowing the case's energy production to become much more efficient when it is convenient for the user to do so.

### Summary of Drawings

These drawings show example embodiments regarding the invention of the present disclosure. The case is comprised of solar cells **1** which are incorporated into the body of the case, and these can also be integrated into a pull out section **5** in a further embodiment. The case also includes an opening **2** disposed at the same location of the device's charging port. At this same location will be a connector **3** which through the use of a suitable plug joins the case's circuit to the portable device's circuit. The main body **4** of the case can be manufactured from almost any material and can be designed to provide different levels of protection to the device. The position occupied by the portable device is represented in grey **6.**

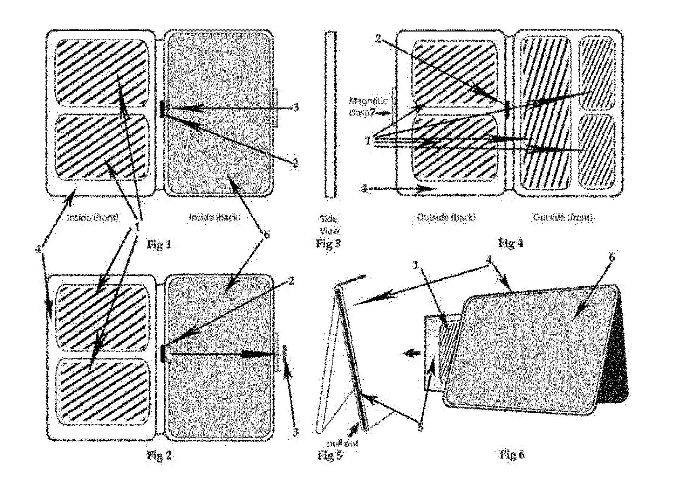

Fig 1 is an aerial view of the case opened up, showing the front inside and back inside. The area which the portable device would fit into is represented in grey **6.** In this embodiment, the connector **3** is fixed in position. Inside the case the connector **3** has a protruding plug which will connect into the device, and on the outside of the case the connector **3** has a female embodiment of the plug which protrudes inside. The standard method of charging may be connected to the device via this outside port on the connector **3** through the opening **2** in the case.
Fig 2 is an aerial view of the case opened up, showing the front inside and back inside. The area which the portable device would fit into is represented in grey **6.** In this embodiment the connector **3** has a protruding plug which will connect into the device, and this connector **3** is removable from the case. Once removed the opening **2** in the case will allow adequate space for the standard method of charging to be connected to the device directly.
Fig 3 is a side view of the case.
Fig 4 is an aerial view of the case opened up, showing the back outside and front outside. In this embodiment the design of the case features a magnetic clasp **7** to secure the case closed.
Fig 5 is an oblique side view of the embodiment of a pull out section **5** which will house incorporated solar cells **1.**
Fig 6 shows an oblique view of a pull out **5** being utilised to expose a solar cell **1** incorporated into the pull out. The area which the portable device would fit into is represented in grey **6.**
Fig 7 depicts a diagram showing a simple embodiment of the circuit within the case. The input on the left-hand side would come from the solar panel, while various voltage regulator chips **VR** and resistors **R1** and **R2** will alter the electric supply to the specific needs of the portable device to be charged. On the right-hand side the desired output will be delivered to the portable device through the use of a removable or fixed connector within the case.

### Objects and Advantages

An advantageous feature of all embodiments of a solar powered case of the present invention may be found in the solar charging aspect of the case. The case will not cause the user any inconvenience over a regular case in terms of significant size and weight increases or reduced usability of the portable device itself, and it will not bear the hassle of having to carry a separate piece of equipment for charging of the portable device. The user will not have to begin the charging; charging will automatically begin when the battery requires charge and the solar cells are producing energy. Additionally, the user will be able to connect the standard method of charging to the device without having to remove the case.

### Description

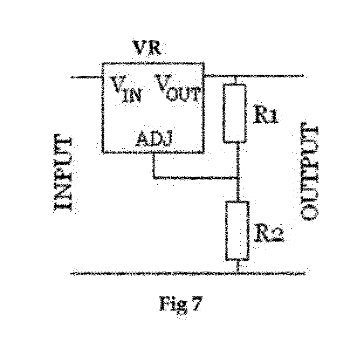

The circuit within the case will consist of a single or multiple solar cells integrated into the case, and it will include various regulator chips and resistors to achieve a specific electrical output dependent upon the requirements of the portable device. Figure 7 shows an example embodiment of the circuit within the case. A further embodiment will also include components to prevent overcharging of the portable device. Charging will begin automatically when conditions are met; once the solar cells are capable of producing energy from radiant light sources and the battery is not at full capacity charging will begin. The circuit will be connected to the portable device through the use of electrical contacts, which will enable the energy produced by the solar cell or cells to charge the battery of the portable device.

The case includes in-built electrical connectors that act as contacts allowing the energy producing circuitry of the case to be connected to the charging circuitry of the portable device. These in-built electrical connectors will vary depending on the exact portable device and configuration of the case. These will either be fixed in position, or removable. The former fixed connector will include a female pass-through port, which will be accessible from the outside of the case, and will allow the device's standard charging method to be connected to the device via the case. The latter removable connector will leave a void in the case once removed, and through this opening the standard method of charging can be inserted into the portable device.

## Claims

1. A solar powered case for portable devices, comprising of
A case with solar panels incorporated into the body, whereby the solar panels are an electrical cell capable of producing electricity from any radiant light sources. The case may include only one solar panel or multiple solar panels.
Circuitry within the case which is electrically connected to one or more solar panels integrated into the case.
The case's circuit will have electrical plugs disposed within the case at a location that allows the plug to join the case's energy producing electrical circuit together with the internal circuit of the portable device, so that when the solar panel is producing energy and the device's battery is not at full capacity it is automatically recharged.
Additionally the case will provide no inconveniences over a regular case in terms of inhibiting the functioning or use of the portable device, and the case can be used on any rechargeable battery powered portable device; this includes but is not limited to examples such as tablets like the Asus© Eee Pad@ and also mobile phones such as the Apple© iPhone©.

2. A case for portable devices as recited in Claim 1, wherein
The circuit within the case contains components which automatically stop charging to prevent overcharging the device's battery when it has reached full capacity.

3. A case for portable devices as recited in Claim 1, wherein the case includes a drawer-like pull out section that houses additional integrated solar cells which are connected to the case's electrical circuit.

4. A case for portable devices as recited in Claim 2, wherein the case includes a drawer-like pull out section that houses additional integrated solar cells which are connected to the case's electrical circuit.

5. A case for portable devices as recited in Claim 1, wherein the case includes a drawer-like pull out section that houses additional integrated solar cells which can be selectively added into or excluded from the case's circuit.

6. A case for portable devices as recited in Claim 2, wherein the case includes a drawer-like pull out section that houses additional integrated solar cells which can be selectively added into or excluded from the case's circuit.

7. A case for portable devices as recited in Claim 1, wherein
The electrical plugs disposed within the case which connect the case's circuitry to the portable device's circuitry are removable, and in doing so the case will subsequently have an opening where the standard method of charging can be connected to the device directly. Once the plug is removed from the case, the case can be used as any commonly available regular case for the purposes of protection or aesthetics.

8. A case for portable devices as recited in Claim 2, wherein
The electrical plugs disposed within the case which connect the case's circuitry to the portable device's circuitry are removable, and in doing so the case will subsequently have an opening where the standard method of charging can be connected to the device directly. Once the plug is removed from the case, the case can be used as any commonly available regular case for the purposes of protection or aesthetics.

9. A case for portable devices as recited in Claim 3, wherein
The electrical plugs disposed within the case which connect the case's circuitry to the portable device's circuitry are removable, and in doing so the case will subsequently have an opening where the standard method of charging can be connected to the device directly. Once the plug is removed from the case, the case can be used as any commonly available regular case for the purposes of protection or aesthetics.

10. A case for portable devices as recited in Claim 4, wherein
The electrical plugs disposed within the case which connect the case's circuitry to the portable device's circuitry are removable, and in doing so the case will subsequently have an opening where the standard method of charging can be connected to the device directly. Once the plug is removed from the case, the case can be used as any commonly available regular case for the purposes of protection or aesthetics.

11. A case for portable devices as recited in Claim 5, wherein
The electrical plugs disposed within the case which connect the case's circuitry to the portable device's circuitry are removable, and in doing so the case will subsequently have an opening where the standard method of charging can be connected to the device directly. Once the plug is removed from the case, the case can be used as any commonly available regular case for the purposes of protection or aesthetics.

12. A case for portable devices as recited in Claim 6, wherein
The electrical plugs disposed within the case which connect the case's circuitry to the portable device's circuitry are removable, and in doing so the case will subsequently have an opening where the standard method of charging can be connected to the device directly. Once the plug is removed from the case, the case can be used as any commonly available regular case for the purposes of protection or aesthetics.

13. A case for portable devices as recited in Claim 1, wherein
The electrical plugs disposed within the case which connect the case's circuitry to the portable device's circuitry are fixed within the case and not removable. To accommodate the standard charging method for the device, the plug incorporates a female pass-through port positioned on the outside of the case. This allows the standard charging method to connect to the device via the case.

14. A case for portable devices as recited in Claim 2, wherein
The electrical plugs disposed within the case which connect the case's circuitry to the portable device's circuitry are fixed within the case and not removable. To accommodate the standard charging method for the device, the plug incorporates a female pass-through port positioned on the outside of the case. This allows the standard charging method to connect to the device via the case.

15. A case for portable devices as recited in Claim 3, wherein
The electrical plugs disposed within the case which connect the case's circuitry to the portable device's circuitry are fixed within the case and not removable. To accommodate the standard charging method for the device, the plug incorporates a female pass-through port positioned on the outside of the case. This allows the standard charging method to connect to the device via the case.

16. A case for portable devices as recited in Claim 4, wherein
The electrical plugs disposed within the case which connect the case's circuitry to the portable device's circuitry are fixed within the case and not removable. To accommodate the standard charging method for the device, the plug incorporates a female pass-through port positioned on the outside of the case. This allows the standard charging method to connect to the device via the case.

17. A case for portable devices as recited in Claim 5, wherein
The electrical plugs disposed within the case which connect the case's circuitry to the portable device's circuitry are fixed within the case and not removable. To accommodate the standard charging method for the device, the plug incorporates a female pass-through port positioned on the outside of the case. This allows the standard charging method to connect to the device via the case.

18. A case for portable devices as recited in Claim 6, wherein
The electrical plugs disposed within the case which connect the case's circuitry to the portable device's circuitry are fixed within the case and not removable. To accommodate the standard charging method for the device, the plug incorporates a female pass-through port positioned on the outside of the case. This allows the standard charging method to connect to the device via the case.
